# FASCICULE DE BREVET EUROPEEN

(11) **EP 2 170 685 B1**
(45) Date de publication et mention de la délivrance du brevet: **10.07.2013**
(21) Numéro de dépôt: 08805822.7
(22) Date de dépôt: 21.05.2008
(51) Int. Cl.: B62D 65/16, B60R 19/24, B62D 21/15

(54) **PROCEDE DE MONTAGE D'UN PARE-CHOCS SUR UNE STRUCTURE DE VEHICULE AUTOMOBILE.**
VERFAHREN ZUR BEFESTIGUNG EINES STOSSFÄNGERS AN DER STRUKTUR EINES KRAFTFAHRZEUGS
METHOD FOR MOUNTING A BUMPER ON THE STRUCTURE OF AN AUTOMOBILE

(30) Priorité: 26.07.2007 FR 0756751
(43) Date de publication de la demande: 07.04.2010
(73) Titulaire: Peugeot Citroën Automobiles Société Anonyme, 78140 Vélizy Villacoublay (FR)
(72) Inventeur: REMY, Stéphane, F-70400 Belverne (FR); LEPINE, Arnaud, F-25420 Bart (FR)
(86) Numéro de dépôt international: PCT/FR2008/050876
(87) Numéro de publication internationale: WO 2009/013416

(56) Documents cités:
- EP-A- 0 291 385
- EP-A- 1 266 818
- WO-A-2007/028908
- FR-A- 2 816 273
- US-A- 5 125 705
- US-B1- 6 282 769

## Description

La présente invention concerne un procédé de montage d'un pare-chocs sur une structure de véhicule automobile, le pare-chocs comprenant une armature de pare-chocs et la structure comprenant un soubassement formé d'une poutre transversale, de longerons et de supports de fixation portés par les longerons, procédé du type selon lequel on positionne et on fixe l'armature sur la structure par rapport à des références géométriques prédéterminées dont certaines sont solidaires des supports de fixation tandis que d'autres sont solidaires de la poutre.
On connait par les documents US6282769 et US5125705 des véhicules à moteur comportant une structure (12) comprenant un soubassement (22) formé d'une poutre transversale 26), de longerons (24) et de supports de fixation (28) portés par les longerons (24) et un pare-chocs (10) comprenant une armature de pare-chocs (14) venant se fixer sur lesdits supports de fixation (28).

Aujourd'hui, ces références, c'est-à-dire les éléments tels que les indexages et les fixations qui permettent la mise en place du pare-chocs sur la structure du véhicule, sont créées très tôt dans le synoptique du montage et à des stades d'assemblage différents, ce qui engendre des dispersions géométriques entre elles.

Toutefois, une fois l'armature agencée sur la structure, il convient que le pare-chocs respecte certaines cotations, comme par exemple sa position par rapport aux éléments de carrosserie environnants. Les jeux et affleurements entre le pare-chocs et l'aile, le capot moteur ou un bloc optique par exemple, doivent être maîtrisés afin de garantir une certaine qualité perçue.

De plus, le pare-chocs ainsi que certains éléments de la structure ont également leurs propres dispersions géométriques.

L'invention a pour but de proposer un procédé simple et peu coûteux de montage du pare-chocs sur la structure qui permette de prendre en considération les différentes dispersions géométriques et donc d'améliorer l'esthétique du véhicule en terme de qualité perçue.

A cet effet, l'invention a pour objet un procédé du type précité, caractérisé en ce que :
- on équipe une première partie de l'armature de pièces de compensation montées réglables sur l'armature ;
- on fixe une deuxième partie de l'armature sur les supports de fixation, la position des pièces de compensation étant telle qu'elles sont espacées de la poutre lorsque ladite fixation a été réalisée ; et
- on complète la mise en place de l'armature sur la structure en déplaçant les pièces de compensation de manière à les amener en contact avec la poutre.

Le procédé selon l'invention peut comporter une ou plusieurs des caractéristiques suivantes :
- les pièces de compensation sont montées coulissantes sur l'armature ; et
- les pièces de compensation sont montées coulissantes sur l'armature suivant une direction sensiblement verticale.

L'invention a également pour objet un pare-chocs destiné à être monté sur une structure de véhicule automobile, du type comprenant une armature de pare-chocs, la structure comprenant un soubassement formé d'une poutre transversale, de longerons et de supports de fixation portés par les longerons, caractérisé en ce que ladite armature de pare-chocs (14) comprend une première partie (16) équipée de pièces de compensation (20) montées réglables sur l'armature (14) et propres à être amenées d'une première position où elles sont espacées de ladite poutre (26) après la fixation d'une deuxième partie (18) de l'armature (14) sur lesdits supports de fixation (28) à une seconde position où elles sont en contact avec ladite poutre (26).

Le pare-chocs selon l'invention peut comporter une ou plusieurs des caractéristiques suivantes :
- les pièces de compensation sont montées coulissantes sur l'armature ;
- les pièces de compensation sont montées coulissantes sur l'armature suivant une direction sensiblement verticale ; et
- les pièces de compensation présentent une forme sensiblement en U ou en L.

L'invention a en outre pour objet un véhicule automobile, du type comportant une structure comprenant un soubassement formé d'une poutre transversale, de longerons et de supports de fixation portés par les longerons, caractérisé en ce qu'il comporte un pare-chocs tel que décrit précédemment, fixé sur les supports de fixation et en appui sur la poutre.

Le véhicule automobile selon l'invention peut comporter la caractéristique selon laquelle le pare-chocs est un pare-chocs avant.

L'invention sera mieux comprise à la lecture de la description qui va suivre, donnée uniquement à titre d'exemple et faite en se référant aux dessins annexés, sur lesquels :
- la Figure 1 est une vue en perspective montrant un pare-chocs selon l'invention avant son montage sur une structure de véhicule automobile ;
- la Figure 2 est une vue similaire à celle de la Figure 1 montrant une étape intermédiaire du montage ;
- la Figure 3 est une vue en perspective agrandie montrant une pièce de compensation selon un premier mode de réalisation de l'invention et lors de l'étape finale du montage ; et
- la Figure 4 est une vue similaire à celle de la Figure 3 montrant une pièce de compensation selon un deuxième mode de réalisation de l'invention.

Afin de simplifier la description qui va suivre, les Figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position et d'orientation qui sont utilisés par la suite s'entendent par rapport à ce système d'axes.

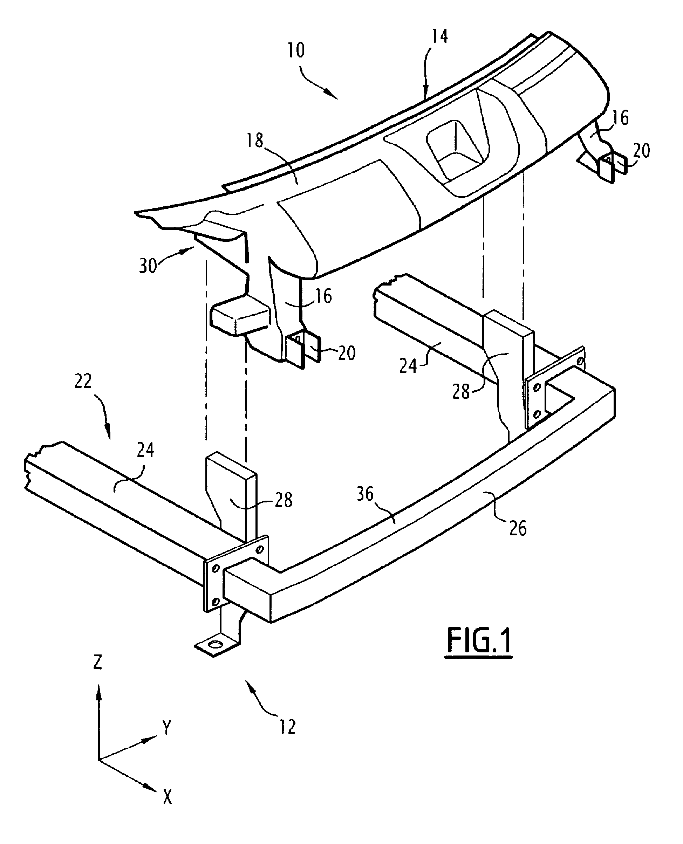

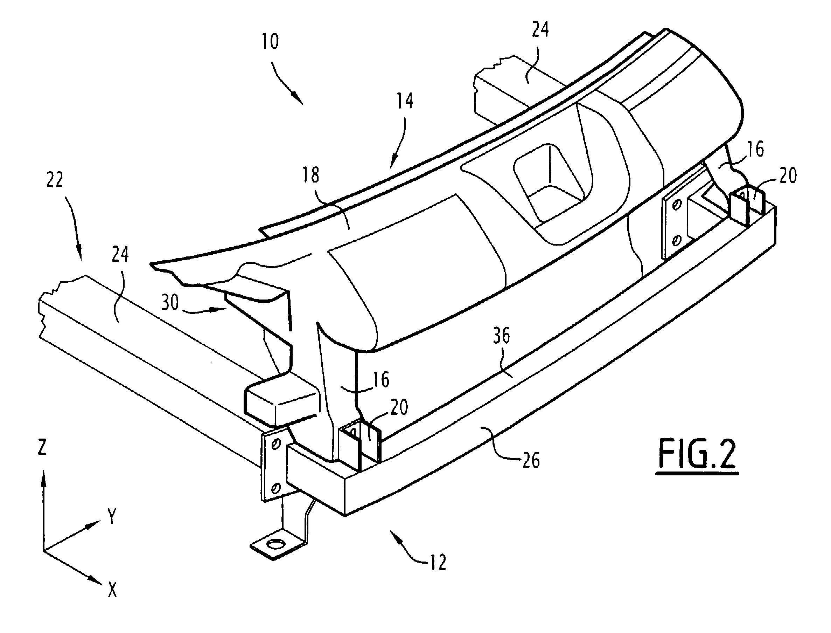

Les Figures 1 et 2 illustrent, de façon simplifiée, une partie d'un pare-chocs avant 10 destiné à être monté sur une structure 12 d'un véhicule automobile.

Le pare-chocs 10 comprend une armature de pare-chocs 14 s'étendant sensiblement transversalement par rapport au véhicule et comportant une première partie inférieure 16 et une deuxième partie supérieure 18.

La partie inférieure 16 est équipée, de part et d'autre de l'armature 14, d'une pièce de compensation 20 montée réglable sur l'armature 14.

La structure 12 comprend un soubassement 22 dont la partie avant comporte entre autres deux longerons 24 reliés entre eux au moyen d'une poutre transversale 26, cette dernière étant montée par vissage à l'extrémité avant de chaque longeron 24.

La partie avant du soubassement 22 comprend également des supports de fixation 28 destinés à la fixation du pare-chocs 10 sur la structure 12. De part et d'autre du soubassement 22, sur chaque longeron 24 est fixé un support de fixation 28.

Les supports de fixation 28 constituent des références géométriques précises pour le positionnement et la fixation du pare-chocs 10 sur la structure 12. Chaque support 28 est positionné de façon précise sur le soubassement 22 à un stade de fabrication où la géométrie du véhicule est stabilisée. A contrario, la poutre 26 constitue, de par sa fixation sur les longerons 24, une référence géométrique non précise, comme cela sera expliqué plus en détail ultérieurement.

La partie supérieure 18 de l'armature 14 est adaptée pour être fixée sur les supports de fixation 28 par une zone 30 de positionnement et de fixation.

La partie inférieure 16 est propre à s'appuyer sur la poutre 26 par l'intermédiaire des pièces de compensation 20.

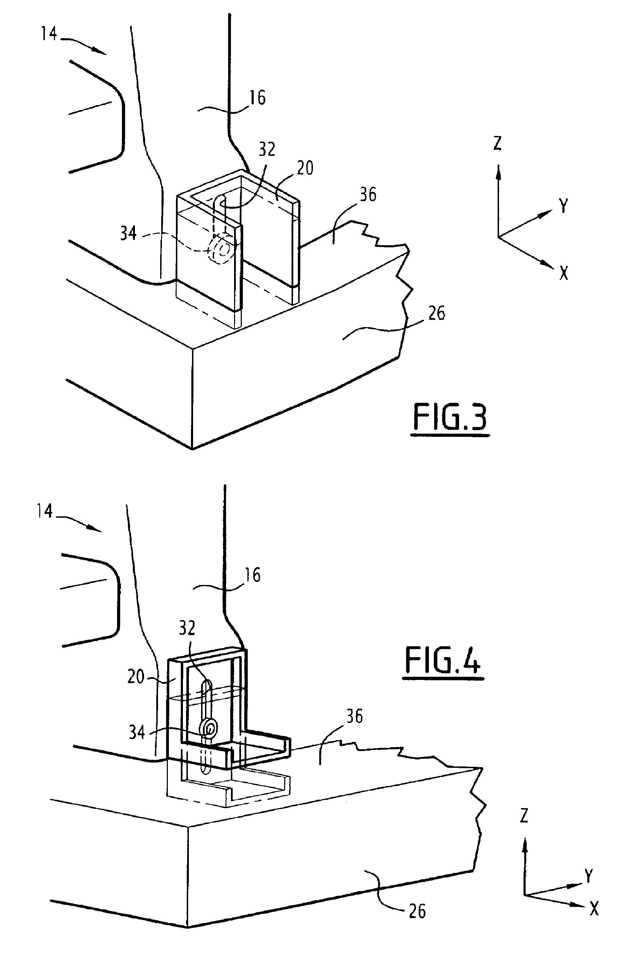

Comme on le voit mieux sur la Figure 3, chaque pièce 20 présente une forme sensiblement en U couché, et est montée coulissante sur l'armature 14 suivant une direction sensiblement verticale.

Pour cela, une lumière 32 de forme oblongue est ménagée dans l'âme du U de la pièce 20 et s'étend dans la direction verticale.

Un système 34, par exemple un ensemble vis-écrou, permet de guider le coulissement vertical de la pièce 20 et permet également de verrouiller par serrage la pièce 20 en position.

Selon une variante de réalisation du système 34, non représentée mais donnée à titre d'exemple non limitatif, un système cranté peut participer au verrouillage de la pièce 20 sur l'armature 14. Pour cela, la lumière 32 comprend une succession de crans qui sont destinés à coopérer avec la vis de serrage. Dans un autre mode de réalisation du système de crantage, la partie de la pièce 20 destinée à venir en appui contre l'armature 14 et/ou la zone de l'armature 14 venant en appui contre cette pièce de compensation 20 comprennent des nervures et/ou rainures formant crantage, ce qui permet un réglage rapide de la position de la pièce de compensation 20 contre la poutre 26.

Selon une variante de réalisation du moyen de serrage de la pièce 20 contre l'armature 14, un ensemble quart de tour est utilisé, ce qui permet un réglage rapide de la position de la pièce de compensation 20 contre la poutre 26, ce qui permet une fixation rapide de la pièce de compensation 20 contre la poutre 26.

En variante et comme illustré sur la Figure 4, la pièce 20 présente une forme sensiblement en L, la lumière 32 étant prévue dans la branche verticale du L.

Lors du montage du pare-chocs 10 sur la structure 12, on positionne et on fixe la partie supérieure 18 de l'armature 14 sur les supports de fixation 28 au niveau des zones 30.

Dans cette position et suite aux dispersions géométriques subies par les différents éléments, la partie inférieure 16 de l'armature 14 ne repose pas sur la poutre 26 ; il y a un jeu entre les pièces de compensation 20 et la surface supérieure 36 de la poutre 26.

Cette position des pièces 20 espacées de la poutre 26 est représentée en traits pleins sur les Figures 3 et 4.

On complète alors la mise en place de l'armature 14 sur la structure 12 en déplaçant, plus précisément en faisant coulisser verticalement, les pièces 20 de manière à les amener en contact avec la surface 36, position représentée en traits mixtes sur les Figures 3 et 4.

Ainsi, le jeu entre les pièces 20 et la poutre 26 est rattrapé et la partie inférieure 16 de l'armature 14 est en appui sur la poutre 26.

L'invention permet donc de disposer d'un minimum de références géométriques en amont du stade de montage du pare-chocs sur la structure du véhicule, et d'adapter les autres références en fonction de la géométrie des différents éléments ; l'esthétique du véhicule s'en trouve améliorée.

## Revendications

1. Procédé de montage d'un pare-chocs (10) sur une structure (12) de véhicule automobile, le pare-chocs (10) comprenant une armature de pare-chocs (14) et la structure (12) comprenant un soubassement (22) formé d'une poutre transversale (26), de longerons (24) et de supports de fixation (28) portés par les longerons (24), procédé du type selon lequel on positionne et on fixe l'armature (14) sur la structure (12) par rapport à des références géométriques prédéterminées dont certaines sont solidaires des supports de fixation (28) tandis que d'autres sont solidaires de la poutre (26), **caractérisé en ce que** :
- on équipe une première partie (16) de l'armature (14) de pièces de compensation (20) montées réglables sur l'armature (14) ;
- on fixe une deuxième partie (18) de l'armature (14) sur les supports de fixation (28), la position des pièces de compensation (20) étant telle qu'elles sont espacées de la poutre (26) lorsque ladite fixation a été réalisée ; et
- on complète la mise en place de l'armature (14) sur la structure (12) en déplaçant les pièces de compensation (20) de manière à les amener en contact avec la poutre (26).

2. Procédé selon la revendication 1, **caractérisé en ce que** les pièces de compensation (20) sont montées coulissantes sur l'armature (14).

3. Procédé selon la revendication 2, **caractérisé en ce que** les pièces de compensation (20) sont montées coulissantes sur l'armature (14) suivant une direction sensiblement verticale.

4. Véhicule automobile comportant une structure (12) comprenant un soubassement (22) formé d'une poutre transversale (26), de longerons (24) et de supports de fixation (28) portés par les longerons (24), et un pare-chocs (10) fixé sur les supports de fixation (28) et en appui sur la poutre (26) et comprenant une armature de pare-chocs (14), **caractérisé en ce que** ladite armature de pare-chocs (14) comprend une première partie (16) équipée de pièces de compensation (20) montées réglables sur l'armature (14) et propres à être amenées d'une première position où elles sont espacées de ladite poutre (26) après la fixation d'une deuxième partie (18) de l'armature (14) sur lesdits supports de fixation (28) à une seconde position où elles sont en contact avec ladite poutre (26).

5. Véhicule automobile selon la revendication 4, **caractérisé en ce que** les pièces de compensation (20) sont montées coulissantes sur l'armature (14).

6. Véhicule automobile selon la revendication 5, **caractérisé en ce que** les pièces de compensation (20) sont montées coulissantes sur l'armature (14) suivant une direction sensiblement verticale.

7. Véhicule automobile selon l'une quelconque des revendications 4 à 6, **caractérisé en ce que** les pièces de compensation (20) présentent une forme sensiblement en U ou en L.

8. Véhicule automobile selon l'une quelconque des revendications 4 à 7, **caractérisé en ce que** le pare-chocs (10) est un pare-chocs avant.

## Patentansprüche

1. Verfahren zur Befestigung eines Stoßfängers (10) auf einer Struktur (12) eines Kraftfahrzeugs, wobei der Stoßfänger (10) eine Stoßfängerbewehrung (14) aufweist und die Struktur (12) eine Unterseite (22) aufweist, die aus einem Querträger (26), Längsträgern (24) und Befestigungsträgern (28), die von den Längsträgern (24) getragen werden, gebildet ist, Verfahren des Typs, gemäß welchem man die Bewehrung (14) auf der Struktur (12) unter Bezugnahme auf vorbestimmte geometrische Referenzen, von welchen bestimmte fest mit Befestigungsträger (28) verbunden sind, während andere fest mit dem Querträger (26) verbunden sind, positioniert und befestigt, **dadurch gekennzeichnet, dass**
- man einen ersten Teil (16) der Bewehrung (14) mit Kompensationsteilen (20), die einstellbar auf die Bewehrung (14) montiert sind, ausrüstet;
- man einen zweiten Teil (18) der Bewehrung (14) auf den Befestigungsträgern (28) befestigt, wobei die Position der Kompensationsteile (20) derart ist, dass sie von dem Querträger (26) beabstandet sind, wenn die Befestigung ausgeführt wurde; und
- man das Anbringen der Bewehrung (14) auf der Struktur (12) vervollständigt, indem man die Kompensationsteile (20) derart verlagert, dass man sie mit dem Querträger (26) in Berührung bringt.

2. Verfahren nach Anspruch 1, **dadurch gekennzeichnet, dass** die Kompensationsteile (20) auf der Bewehrung (14) gleitend montiert sind.

3. Verfahren nach Anspruch 2, **dadurch gekennzeichnet, dass** die Kompensationsteile (20) auf der Bewehrung (14) entlang einer im Wesentlichen senkrechten Richtung gleitend montiert sind.

4. Kraftfahrzeug, das eine Struktur (12) aufweist, die eine Unterseite (22) aufweist, die aus einem Querträger (26), Längsträgern (24) und Befestigungsträgern (28), die von den Längsträgern (24) getragen werden, gebildet ist, und einen Stoßfänger (10), der auf den Befestigungsträgern (28) befestigt und in Auflage auf dem Querträger (26) ist und eine Stoßfängerbewehrung (14) aufweist, **dadurch gekennzeichnet, dass** die Stoßfängerbewehrung (14) einen ersten Teil (16) aufweist, der mit Kompensationsteilen (20) ausgerüstet ist, die auf der Bewehrung (14) einstellbar montiert und geeignet sind, um von einer ersten Position, in der sie von dem Querträger (26) beabstandet sind, nach dem Befestigen eines zweiten Teils (18) der Bewehrung (14) auf den Befestigungsträgern (28) zu einer zweiten Position gebracht werden können, in der sie mit dem Querträger (26) in Berührung sind.

5. Kraftfahrzeug nach Anspruch 4, **dadurch gekennzeichnet, dass** die Kompensationsteile (20) auf der Bewehrung (14) gleitend montiert sind.

6. Kraftfahrzeug nach Anspruch 5, **dadurch gekennzeichnet, dass** die Kompensationsteile (20) auf der Bewehrung (14) entlang einer im Wesentlichen senkrechten Richtung gleitend montiert sind.

7. Kraftfahrzeug nach einem der Ansprüche 4 bis 6, **dadurch gekennzeichnet, dass** die Kompensationsteile (20) eine im Wesentlichen U-förmige oder L-förmige Form aufweisen.

8. Kraftfahrzeug nach einem der Ansprüche 4 bis, 7, **dadurch gekennzeichnet, dass** der Stoßfänger (10) ein vorderer Stoßfänger ist.

## Claims

1. A method for mounting a bumper (10) on a structure (12) of an automobile, the bumper (10) including a bumper armature (14) and the structure (12) including an understructure (22) formed by a transverse beam (26), side rails (24) and attachment supports (28) carried by the side rails (24), a method of the type according to which the armature (14) is positioned and fixed on the structure (12) with respect to predetermined geometrical references, some of which are integral with the attachment supports (28) whereas others are integral with the beam (26), **characterized in that**:
- a first portion (16) of the armature (14) is equipped with compensation parts (20) adjustably mounted on the armature (14);
- a second portion (18) of the armature (14) is fixed on the attachment supports (28), the position of the compensation parts (20) being such that they are spaced from the beam (26) when the said attachment has been carried out; and
- the placing of the armature (14) on the structure (12) is completed by moving the compensation parts (20) so as to bring them in contact with the beam (26).

2. The method according to Claim 1, **characterized in that** the compensation parts (20) are slidably mounted on the armature (14).

3. The method according to Claim 2, **characterized in that** the compensation parts (20) are slidably mounted on the armature (14) along a substantially vertical direction.

4. An automobile comprising a structure (12) including an understructure (22) formed by a transverse beam (26), side rails (24) and attachment supports (28) carried by the side rails (24), and a bumper (10) fixed on the attachment supports (28) and resting on the beam (26) and including a bumper armature (14), **characterized in that** the said bumper armature (14) includes a first portion (16) equipped with compensation parts (20) adjustably mounted on the armature (14) and suited to be brought from a first position in which they are spaced from the said beam (26) after the attaching of a second portion (18) of the armature (14) on the said attachment supports (28) to a second position in which they are in contact with the said beam (26).

5. The automobile according to Claim 4, **characterized in that** the compensation parts (20) are slidably mounted on the armature (14).

6. The automobile according to Claim 5, **characterized in that** the compensation parts (20) are slidably mounted on the armature (14) along a substantially vertical direction.

7. The automobile according to any one of Claims 4 to 6, **characterized in that** the compensation parts (20) have substantially a U or L shape.

8. The automobile according to any one of Claims 4 to 7, **characterized in that** the bumper (10) is a front bumper.
